# EUROPEAN PATENT APPLICATION

(11) **EP 2 050 499 A1**
(43) Date of publication of application: **22.04.2009**
(21) Application number: 08166942.6
(22) Date of filing: 17.10.2008
(51) Int. Cl.: B01L 3/02, G01N 35/10

(54) **Apparatus and method for dispensing small volume liquid samples**

(30) Priority: 18.10.2007 US 874432
(71) Applicant: Matrix Technologies Corporation, Hudson, NH 03051 (US)
(72) Inventor: Seguin, Daniel J., Amherst, NH 03031 (US)
(74) Representative: Maughan, Sophie Louise

(57) **Abstract**

A pipettor (10) includes a frame (12), a syringe carriage (14) coupled to the frame (12) and carrying at least one syringe (16) therein, and an actuator assembly (18) coupled to the frame (12) and to the syringe (16) having a first contact surface (146) coupled to a first drive mechanism (94) and a second contact surface (140) coupled to a second drive mechanism (128), wherein the first and second contact surfaces (146, 140) cooperate to provide non-contact dispensing of a liquid sample from the syringe (16). A method of dispensing a liquid sample includes moving a first contact surface (146) disposed beneath a head (68) of a syringe (16) to define a first gap (150) therebetween, moving a second contact surface (140) above the head (68) into contact with the head (68), and using the second contact surface (140) to drive the head (68) into forceful contact with the first contact surface (146) to dispense the liquid sample from the syringe (16) in a non-contact operation.

## Description

### Technical Field

Aspects of the invention are directed to apparatus and method for dispensing small volume liquid samples and more particularly, to apparatus and method for dispensing nanoliter volumes of liquid.

### Background

In certain industrial fields, such as the medical and biotechnology fields, various pipettors are typically used to dispense relatively small volume liquid samples. Some pipettors, for example, include syringe-type dispensers having a generally cylindrical syringe body with a piston sealingly disposed therein to dispense a liquid sample from a needle projecting from the distal end of the syringe body upon movement of the piston. Such syringe-type pipettors are common within the industry. The advantages of syringe pipettors include a simple design having relatively few parts, ease of operation, industry familiarity and acceptance, cost effectiveness, and others.

However, one drawback of current syringe pipettors is that to dispense the liquid sample from the tip of the needle, the pipettor must either employ a contact dispensing mode of operation or the volume of the liquid sample must be relatively high so that the liquid sample separates from the needle tip under its own weight. In this regard, a contact dispensing mode of operation typically requires that some portion of the pipettor make contact with the receiving surface (e.g., a substrate, test tube, test well, etc. onto which or into which the liquid sample is being dispensed). For example, in some prior pipettors, the needle may be moved to make contact with a portion of the receiving surface in order to dislodge the liquid sample from the tip of the needle. Contact dispensing may also be achieved by having the liquid sample at the tip of the needle simultaneously contact the receiving surface. In this case, the attraction between the liquid sample and the receiving surface may be sufficient to dislodge or draw the liquid sample from the tip of the needle. In either of these examples, however, there must be some contact between the pipettor and the receiving surface, either directly or indirectly through, for example, the liquid sample.

In some applications, such contact may not be desirable. For example, in some biotechnology applications, such contact may present contamination or cross-contamination concerns.

Such concerns may be overcome by using a pipettor that employs a non-contact dispensing mode of operation. As noted above, syringe pipettors may be capable of operating in a non-contact mode. More particularly, in this mode, the weight of the liquid sample hanging at the tip of the needle must be sufficient to overcome the surface tension forces that tend to retain the liquid sample to the needle tip. For many liquids, the size of the liquid sample having a weight that overcomes such surface tension effects have volumes in the microliter range. Accordingly, the use of syringe pipettors for dispensing small liquid samples, such as in the nanoliter range, has heretofore been problematic.

Other non-contact dispensing pipettors are known and typically employ a valve mechanism having a valve element that engages/disengages a valve seat to selectively dispense a liquid sample therefrom. When the valve element comes away from the valve seat, pressurized liquid is able to flow beneath the tip thereof and into a discharge passage downstream of the valve seat. When the valve element is moved quickly so as to engage the valve seat, the liquid beneath the tip and in the discharge passage is jetted out of the pipettor as a droplet. An actuator, such as a pneumatic, electromagnet (solenoid), or piezoelectric actuator, may be used to reciprocate the valve element between the opened and closed positions. Some valve operated pipettors may be capable of dispensing small liquid samples, such as those in the nanoliter range. However, while generally being effective for dispensing small volume liquid samples in a non-contact manner, such valve operated pipettors have a relatively complex design with many interoperating parts, may be difficult to operate and maintain, and are generally cost prohibitive.

Accordingly, there is a need for an improved pipettor and method for dispensing small volume liquid samples, such as those in the nanoliter range, in a non-contact mode that overcomes the disadvantages of existing valve operated pipettors and methods.

### Summary

A pipettor for dispensing liquid samples from at least one syringe having a syringe body containing the supply of the liquid to be dispensed, and a movable piston disposed therein includes a frame, a syringe carriage coupled to the frame and adapted to support the syringe therein, and an actuator assembly coupled to the frame and operatively coupled to the piston for actuating the syringe to dispense the liquid sample. The actuator assembly includes a first contact surface coupled to a first drive mechanism and a second contact surface coupled to a second drive mechanism, wherein the first and second contact surfaces cooperate to provide non-contact dispensing of the liquid sample from the syringe.

In one embodiment, the first contact surface may be defined by an anvil plate that is movably mounted to the frame and coupled to the first drive mechanism for moving the anvil plate relative to the syringe carriage. The second contact surface may be defined by a hammer plate coupled to the second drive mechanism for moving the hammer plate relative to the anvil plate. In one embodiment, the hammer plate may be movably mounted to the anvil plate and the anvil plate may carry the second drive mechanism. The first drive mechanism may be a linear slide and the second drive mechanism may be a solenoid actuator. The linear slide may comprise a stepper motor, a lead screw coupled to the stepper motor, a mounting block coupled to the lead screw, and a track coupled to the mounting block, wherein activation of the stepper motor rotates the lead screw to move the mounting block along the track.

In another embodiment, a pipettor for dispensing a liquid sample onto a receiving surface includes a frame, a syringe carriage fixedly mounted to the frame, and at least one syringe disposed in the syringe carriage. The syringe includes a syringe body adapted to contain a supply of the liquid to be dispensed, a piston movable disposed in the syringe body, a piston rod coupled to the piston, a head on the piston rod opposite the piston, and a needle projecting from the syringe body and having a tip through which the liquid sample is dispensed. The pipettor further includes an actuator assembly coupled to the frame for actuating the syringe to dispense the liquid sample therefrom. The actuator assembly includes a housing movably mounted to the frame and including an anvil plate. The housing is positioned such that the head of the syringe is positioned in the housing and above the anvil plate. A first drive mechanism is coupled to the housing for moving the housing relative to the syringe carriage. A hammer plate is disposed in the housing and located above the head of the syringe. A second drive mechanism is coupled to the hammer plate for moving the hammer plate relative to the anvil plate. The first drive mechanism may be a linear slide, the second drive mechanism may be a solenoid actuator, and the housing may carry the second drive mechanism.

A method for dispensing a liquid sample onto a receiving surface includes moving the first contact surface, such as the anvil plate, disposed beneath the head of the syringe so as to define a first gap therebetween. The second contact surface, such as the hammer plate, which is disposed above the head, may then be moved so as to contact the head. The head of the syringe is then driven into forceful contact with the first contact surface by using the second contact surface. As a result, a relatively small volume liquid sample is dispensed from the syringe and onto the receiving surface. The first contact surface may be moved using the first drive mechanism and the second contact surface may be moved using the second drive mechanism. The first gap effectively defines the stroke length of the piston within the syringe body and thus operates as a controllable parameter for dispensing the desired volume of liquid in the sample. The second contact surface may be positioned so as to initially define a second gap between the second contact surface and the head of the syringe. In this way, the second contact surface has significant velocity and momentum prior to contacting the head. The first drive mechanism may be a linear slide and the second drive mechanism may be a solenoid actuator.

The pipettor may be a dual-purpose pipettor capable of operating in a first mode so as to dispense a liquid sample having a first volume in a non-contact dispensing process and in a second mode so as to dispense a liquid sample having a second volume in a non-contact dispensing process. In the first mode, inertial forces overcome the surface tension forces to separate the liquid sample from the pipettor. In the second mode, gravitational forces separate the liquid sample from the pipettor. The first volume may be in the nanoliter range (e.g., less than approximately 100 nanoliters or less) and the second volume may be in the microliter range (e.g., greater than approximately 0.1 microliters).

These and other objects, advantages and features of the invention will become more readily apparent to those of ordinary skill in the art upon review of the following detailed description taken in conjunction with the accompanying drawings.

### Brief Description of the Drawings

The accompanying drawings, which are incorporated in and constitute a part of this specification, illustrate embodiments of the invention and, together with a general description given above, and the detailed description given below, serve to explain aspects of the invention.
Fig. 1 is a perspective view of a pipettor in accordance with an embodiment of the invention;
Fig. 2 is another perspective view of the pipettor shown in Fig. 1;
Fig. 3A is a partial side elevation view of the pipettor of Fig. 1 in a first position of the dispensing process;
Fig. 3B is a partial side elevation view similar to Fig. 3A but in a second position of the dispensing process; and
Fig. 3C is a partial side elevation view similar to Fig. 3B but in a third position of the dispensing process.

### Detailed Description

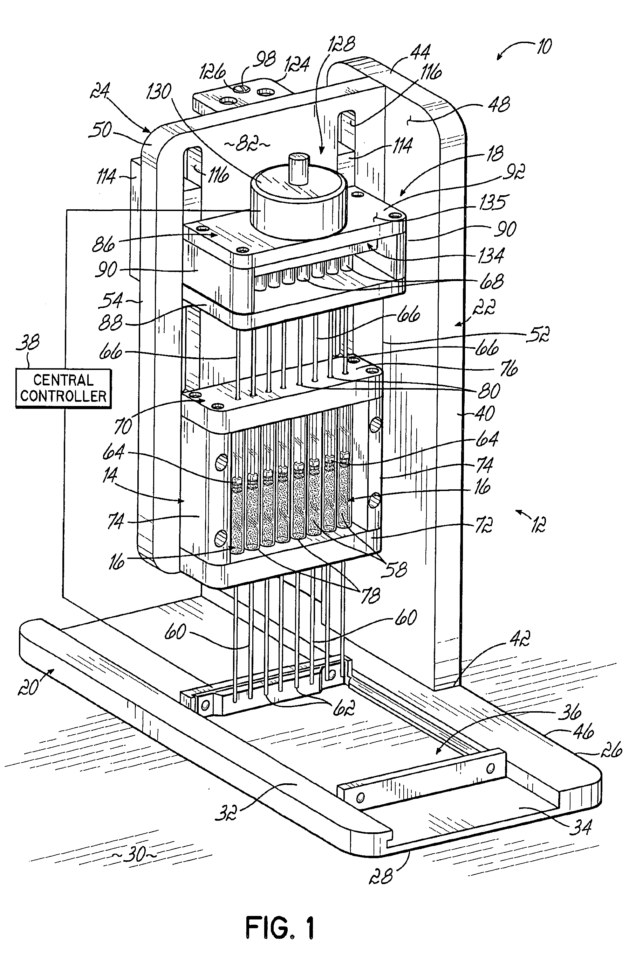

With reference to Fig. 1, a pipettor 10 for dispensing liquid samples is shown. The pipettor 10 includes a frame 12, a syringe carriage 14 having one or more syringes 16 mounted to the frame 12, and a multi-drive actuator assembly 18 for actuating the syringe(s) 16 to thereby dispense a liquid sample onto a receiving surface (not shown).

The frame 12 includes a base member 20, an upright member 22 coupled to the base member 20, and a support member 24 coupled to the upright member 22 and arranged relative to the base member 20. The base member 20 includes a generally rectangular plate-like body 26 having a lower surface 28 adapted to engage a generally horizontal support surface 30, such as a laboratory work surface, table top, etc. An upper surface 32 of the base member 20 includes a groove 34 adapted to receive a holding plate 36 capable of moving relative to the base member 20 along the groove 34. The holding plate 36 is adapted to receive the receiving surface, which may be multi-well microplate, a plurality of test tubes, or other substrates as recognized by those of ordinary skill in the art. As further recognized by those of ordinary skill in the art, the holding plate 36 may be operatively coupled to a drive mechanism (e.g., electric motor, etc., not shown) for moving the holding plate 36 relative to the base member 20 in, for example, a generally horizontal direction. Moreover, the holding plate 36, via its drive mechanism, may be operatively coupled to a central controller, shown schematically at 38, for controlling the movement of the holding plate 36. Such controllers 38 are generally well known in the art and may include a user interface having one or more displays, various input devices (e.g., keyboard, number pad, readers, etc.), input/output connections, including internet connections, and other features that facilitate use of the pipettor 10. The holding plate 36 may be formed from a plastic material, such as Delrin®, or other suitably lubricated materials. The base member 20 may be formed from any suitable material including metals, such as aluminum or stainless steel, or various engineering plastics capable of maintaining the structural integrity of frame 12.

The upright member 22 of frame 12 is coupled to the base member 20 and projects from the upper surface 32 thereof in, for example, a generally vertical direction. The upright member 22 includes a generally rectangular plate-like body 40 having first and second ends 42, 44, wherein in one embodiment the first end 42 is coupled to the base member 20 in a conventional manner, such as by welding, adhesives, fasteners, or other methods generally known in the art. In an alternate embodiment, however, the upright member 22 may be coupled to base member 20 via an adjustment mechanism (not shown), which may be either manual or automatic, to raise/lower the upright member (and thus syringe carriage 14) relative to base member 20 to accommodate various holding plate heights. As shown in Fig. 1, the upright member 22 may be coupled to the base member 20 to one side of groove 34 and adjacent a side surface 46 of base member 20. Such an arrangement defines a confronting surface 48 of the upright member 22 that faces toward the groove 34. The upright member 22 may likewise be formed from any suitable material including metals, such as aluminum or stainless steel, or various engineering plastics capable of maintaining the structural integrity of frame 12.

The support member 24 of frame 12 is coupled to the upright member 22 and includes a generally rectangular plate-like body 50 having first and second side ends 52, 54, wherein the first side end 52 is coupled to the upright member 22 in any conventional manner, such as by welding, adhesives, fasteners, or other methods generally known in the art. As illustrated in Fig. 1, the support member 24 may be coupled to the confronting surface 48 of the upright member 22 such that the support member 24 projects over the base member 20. Moreover, a lower edge 56 of support member 24 may be sufficiently spaced from base member 20 so as not to impede the movement of the holding plate 36 or interfere with the receiving surface located thereon. The support member 24 may also be formed from any suitable material including metals, such as aluminum or stainless steel, or various engineering plastics capable of maintaining the structural integrity of frame 12.

The syringe carriage 14, carrying one or more syringes 16 (e.g., 8 shown), is fixedly mounted to the support member 24 so as to overlie the base member 20, and more particularly, to overlie groove 34 along which the holding plate 36 moves. Each syringe 16 includes a generally cylindrical syringe body 58 adapted to contain the liquid to be dispensed. In one embodiment, the syringe body 58 may be made from glass, as is known in the art. However, other materials may be used to form the syringe body 58 within the scope of the invention including stainless steel tubing or various engineering plastics. Moreover, the syringe bodies 58 may be formed from a machined block of metal or plastic. Additionally, the inner diameter of the syringe body 58 may be on the order of approximately 1 mm. Each syringe 16 may include a needle 60 coupled to the distal end of the syringe body 58 and projecting distally therefrom. The needle 60 terminates in a needle tip 62 from which the liquid sample is dispensed. The needle 60 may be coupled to the syringe body 58 through a friction fit, bonding, threaded connection, molding, welding, combinations of these, or other methods. The needle 60 may be formed from stainless steel or other suitable materials as recognized by those of ordinary skill in the art. Additionally, the outer diameter of the needle 60 may be on the order of approximately 0.50 mm. Those of ordinary skill in the art will recognize that the size of the syringe body 58 and/or needle 60 may be varied away from the above values and still be capable of dispensing liquid samples in the desired volume range (e.g., nanoliters). Accordingly, the above values are exemplary and the invention is not limited thereto.

Each of the syringes 16 further includes a piston 64 disposed within the syringe body 58 and in sealing and sliding engagement with the wall thereof. In one embodiment, for example, the piston 64 may be formed from polytetrafluoroethylene (e.g., Teflon®) or other low friction-creating material capable of moving relative to the wall of the syringe body 58 upon application of a sufficient force, and capable of forming a seal with the wall. Alternatively, the piston 64 may be formed from an inner plastic metal body having an O-ring or other type of seal along the perimeter thereof to seal with the wall of the syringe body 58. Other piston designs may also be used in the pipettor 10, including, for example, a molded rubber cup. Movement of the piston 64 in a first direction (e.g., downward toward the needle 60) within syringe body 58 dispenses a liquid sample from the needle tip 62, as explained in more detail below. Movement of the piston 64 in a second, opposite direction (e.g., upward away from the needle 60) creates a partial vacuum that allows liquid to be aspirated into the needle 60 and syringe body 58. A piston rod 66 is coupled to the piston 64 and projects proximally away from the needle 60 and out of the syringe body 58. The piston rod 66 terminates in a generally cylindrical head 68. Movement of the head 68 causes a corresponding movement to the piston 64 via the piston rod 66. In one embodiment, the piston rod 66 and head 68 may be formed from stainless steel, although other suitable materials, such as other metals or engineering plastics, may also be used. The length of the piston rod 66 is typically such as to allow liquid to be fully expelled from the syringe body 58 (i.e., piston 64 in its lowest most position) while having the head 68 positioned outside the syringe body 58. The outer diameter of the piston rod 66 is typically just slightly less than the inner diameter of the syringe body 58. The head 68 is typically larger than the piston rod 66 and in one embodiment, has a diameter of approximately 5.0 mm and a length of approximately 9.0 mm. Those of ordinary skill in the art will recognize that the dimensions provided above are exemplary and the size of these elements may vary depending on the specific application.

The syringes 16 are mounted to the syringe carriage 14. In this regard, the syringe carriage 14 includes a box-like housing 70 having a lower wall 72, two side walls 74, and an upper wall 76. The lower wall 72 may include one or more stepped bores 78 formed therethrough for receiving a corresponding syringe 16 therein. In particular, each bore 78 includes an upper bore portion having a first diameter and a lower bore portion in communication with the upper bore portion and having a second diameter less than the first diameter to define an annular shoulder therebetween (not shown). The first diameter is typically slightly greater than the outer diameter of the syringe body 58 and the second diameter is typically greater than the outer diameter of the needle 60, but less than the outer diameter of the syringe body 58. In this way, when the syringe 16 is inserted into a bore 78, a lower end of the syringe body 58 fits within the upper bore portion and abuts the shoulder. In a similar manner, the upper wall 76 may include one or more stepped bores 80 formed therethrough for receiving a syringe 16 therein. Each bore 80 includes a lower bore portion having a first diameter and an upper bore portion in communication with the lower bore portion and having a second diameter less than the first diameter to define a shoulder therebetween (not shown). The first diameter is typically slightly greater than the outer diameter of the syringe body 58 and the second diameter is greater than the outer diameter of the piston rod 66 or possibly the piston 64, but less than the outer diameter of the syringe body 58. In this way, when the syringe 16 is inserted into a bore 80, an upper end of the syringe body 58 fits within the lower bore and abuts the shoulder. Each side wall 74 may be coupled to the lower and upper walls 72, 76, such as with threaded fasteners, so as to maintain the relative positions of the lower and upper walls 72, 76 and essentially clamp the syringe(s) 16 therebetween and within enclosure 70.

In one embodiment, the syringe carriage 14 may be assembled by first mounting the side walls 74 to the lower wall 72. A syringe body 58 with a needle 60 projecting therefrom (e.g., separately preassembled) may be mounted to the lower wall 72 by feeding the needle 60 through the bore 78 so that the lower end of the syringe body 58 rests on the shoulder in bore 78. Additional syringes 16 (e.g., eight (8) in total) may be mounted to the syringe carriage 14 in a similar manner. In order to couple the upper wall 76 to syringe carriage 14, in one embodiment, the pistons 64 and/or the heads 68 may be initially separated from the piston rod 66. In this way, an end of the piston rods 66 may be fed through the bores 80 in the upper wall 76 and the pistons 64 and/or heads 68 attached to their respective piston rods 66 such that the upper wall 76 is disposed between the pistons 64 and the heads 68. The pistons 64 may be inserted into the syringe bodies 58 and the upper wall 76 lowered until the shoulder of the bores 80 abuts or is adjacent to the upper end of the syringe bodies 58. The upper wall 76 may then be coupled to each of the side walls 74 to complete the assembly of the syringe carriage 14. In another embodiment, however, the bores 80 in the upper wall 76 may be sized so as to be slightly larger than the pistons 64. Accordingly, the upper wall 76 may be coupled to each of the side walls 74 to complete the assembly of housing 70 and then the pistons 64 and rods 66 inserted through bores 80 and into syringe bodies 58. The syringe carriage 14 may be mounted to the support member 24, such as along a front surface 82 thereof, with threaded fasteners or other techniques known to those of ordinary skill in the art, such that the needles 60 extend below the lower edge 56 of the support member 24 and the needle tips 62 are adjacent the groove 34 and holding plate 36.

The assembly process described above is merely exemplary and those of ordinary skill in the art will recognize other assembly processes or steps that result in the same configuration. The syringe carriage 14 may also have other designs that may facilitate the assembly of the syringes 16 to the carriage 14. For example, the lower wall 72, upper wall 76, or both may include slots (not shown) that extend between the bores 78, 80, respectively, and respective outer surfaces thereof that allow, for example, the syringes 16 to be front loaded into the syringe carriage 14 without assembly/disassembly of the housing 70 in a manner similar to that described above.

As shown in Fig. 1, the actuator assembly 18 is mounted to the support member 24 and adapted to apply an actuating force on the heads 68 so as to move the pistons 64 and dispense a liquid sample from the needle tips 62 of syringes 16. In this regard, the actuator assembly 18 may include a moveable actuator housing and a plurality of drive mechanisms for manipulating heads 68 in a manner that facilitates dispensing small volume liquid samples. In one embodiment, a moveable actuator housing 86 includes a lower wall 88, two side walls 90 and an upper wall 92. The lower wall 88 may include one or more bores (not shown) formed therethrough for receiving a corresponding piston rod 66. The diameter of each bore may be slightly greater than the diameter of a piston rod 66 but less than the diameter of a head 68. The bores may also be slightly larger than pistons 64 to facilitate assembly as discussed below. In this way, the heads 66 may be captured within the housing 86 and movement of the housing 86 may cause a corresponding movement of the heads 66 in a manner described in more detail below. The housing 86 is movable relative to the support member 24, and thus movable relative to the syringe carriage 14 and syringes 16, using a first drive mechanism 94. The first drive mechanism 94 may be operatively coupled to a controller, such as central controller 38, for controlling the first drive mechanism 94, and thus the movement of housing 86.

In one embodiment, the first drive mechanism 94 may include a linear slide including an electric stepper motor 96, a lead screw 98, a mounting block 100, and a track 102. The stepper motor 96 may be of a conventional design and may be fixedly mounted to the support member 24, such as on a rear surface 104 thereof opposite the syringe carriage 14. The stepper motor 96 may be operatively coupled to lead screw 98 and capable of rotating lead screw 98 about a longitudinal axis 106, which may, for example, be oriented in a generally vertical direction. The lead screw 98 may include a generally helical thread thereon (not shown) for moving the mounting block 100 along track 102. In this regard, mounting block 100 may include a threaded aperture 108 that cooperates with the thread on the lead screw 98 such that rotation of the lead screw 98 causes movement of the mounting block 100. The mounting block 100 may include a shaped groove or recess 110 that receives an outer projecting portion of the track 102 having a shape corresponding to the shape or recess 110. For example, the connection may have a dovetail configuration, T-shaped configuration, or other configuration that movably mounts block 100 to track 102. The track 102 may be coupled to the rear surface 104 of the support member 24 and effectively guides the movement of the mounting block 100. The drive mechanism 94 may be configured to move the mounting member 100 in, for example, a generally vertical direction.

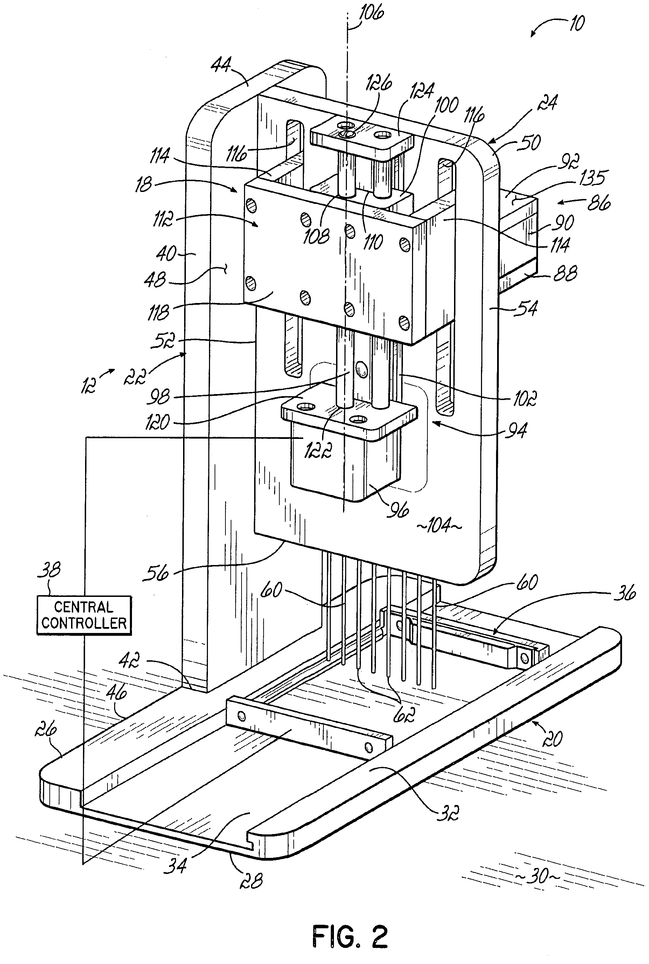

The housing 86 may be operatively coupled to drive mechanism 94 via a mounting bracket 112. The mounting bracket 112 includes side plates 114, which couple to the housing 86, such as at respective side walls 90 of housing 86. The side plates 114 extend through support member 24 via a pair of guide slots 116 formed therethrough. In one embodiment, the side plates 114 and side walls 90 may be integrally formed as a unitary structure. The invention is not limited to such an integral construction, however, as the side plates 114 and side walls 90 may be separate components which are coupled through conventional means such as welding, adhesives, various fasteners, or other techniques known to those of ordinary skill in the art. Mounting bracket 112 further includes a backing plate 118, which may be coupled to the side plates 114 at opposite ends thereof. Such a coupling may be achieved, for example, by one or more threaded fasteners, as is shown in Fig. 2. The backing plate 118 may be coupled to mounting block 100, via one or more threaded fasteners, for example, such that movement of the mounting block 100 causes a corresponding movement in the housing 86.

The actuator assembly 18 may be assembled by first mounting the drive mechanism 94 to the rear surface 104 of the support member 24. In this regard, a lower end plate 120 may be fixedly coupled to support member 24 using a threaded fastener or other connector so as to project therefrom in a substantially perpendicular manner. The stepper motor 96 may be coupled to lower end plate 120 and end plate 120 may include an aperture 122 through which the lead screw 98 projects. The track 102 may be coupled to the rear surface 104 of the support member 24 such that a lower end thereof abuts or is adjacent to the lower end plate 120. The mounting block 100 may be coupled to track 102 by sliding the mounting block 100 over an upper end thereof such that the T-shaped groove 110 mates with the corresponding shaped outer portion of the track 102. The upper end of the track 102 may be closed off by an upper end plate 124 coupled to the track 102 using, for example, threaded fasteners or other connectors. The end plate 124 includes an aperture 126 that receives an end of the lead screw 98 and operates as a bushing therefor. While the elements of first drive mechanism 94 may be coupled to pipettor 10 as describe above, in an alternate embodiment, first drive mechanism 94 may be provided as a subassembly and the subassembly coupled to the rear surface 104 of support member 24 by securing, for example, only the track 102 to support surface 24. Such a subassembly for first drive mechanism 94 may be commercially available from, for example, Pacific Bearing Company of Rockford, Illinois.

To further construction of actuator assembly 18, the housing 86 may be assembled by mounting the side walls 90 to the lower wall 88, such as with threaded fasteners or other connectors. The lower wall 88 may then be disposed between the heads 68 and the pistons 64 such that the piston rods 66 extend through the bores in the lower wall 88. By way of example, this may be accomplished during assembly of the syringe carriage 14 as explained above. Alternatively, the lower wall 88 may include slots (not shown) that extend between the bores and an outer surface thereof that allow, for example, the piston rods 66 to be front loaded into the bores such that the heads 68 are located in housing 86. The upper wall 92 may then be coupled to the side walls 90 such as with threaded fasteners or other connectors. With the housing 86 assembled, the side plates 114, which may be integral with side walls 90 or previously coupled thereto, may be inserted through the guide slots 116 and coupled together by backing plate 118. The backing plate 118 may then be coupled to the mounting block 100. The assembly of the actuator assembly 18 as described above is merely exemplary and those of ordinary skill in the art will recognize other assembly processes that allow the actuator assembly 18 to be coupled to the frame 12 and more particularly to support surface 24.

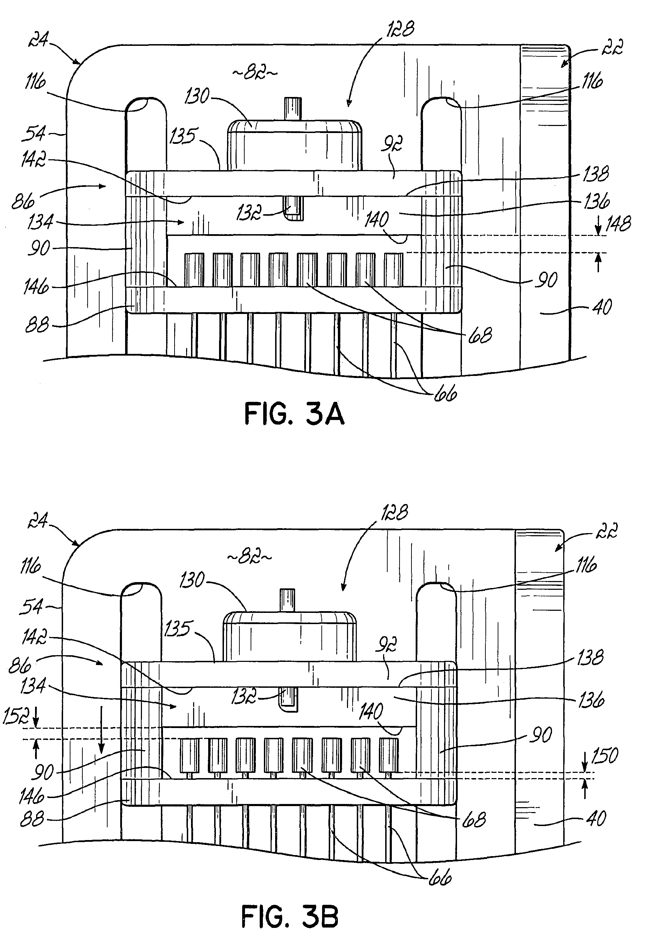

As noted above, the actuator assembly 18 may have a multi-drive feature. To this end, the actuator assembly 18 may include a second drive mechanism 128. As shown in Figs. 3A-3C, the second drive mechanism 128 may be carried by housing 86 and capable of generating movement relative thereto, as explained in more detail below. In one embodiment, the second drive mechanism 128 may include a solenoid actuator 130, a drive rod 132, and a contact or hammer plate 134. The solenoid actuator 130 may be of a conventional design and may be fixedly mounted to housing 86, such as on an upper surface 135 of upper wall 92. The drive rod 132 is operatively coupled to an armature (not shown) of the solenoid actuator 130 and capable of reciprocating movement as a result of activation/deactivation of the solenoid actuator 130. The hammer plate 134 is disposed in the housing 86 and includes a generally rectangular body 136 having an upper surface 138 which may be coupled to an end of the drive rod 132, and a lower surface 140 which may disposed over the top of heads 68. The drive rod 132 may be received through an aperture (not shown) in the upper wall 92 to operatively couple the hammer plate 134 to the solenoid actuator 130 via the drive rod 132. The second drive mechanism 128 may be assembled to the upper wall 92 prior to the upper wall 92 being secured to the side walls 90 to form housing 86, as explained above. Alternatively, the second drive mechanism 128 may be coupled to upper wall 92 after housing 86 has been assembled.

The solenoid actuator 130 is capable of moving the hammer plate 134 between a retracted position and an extended position relative to the housing 86. Control of the solenoid actuator 130 may be achieved by operatively coupling the solenoid 130 to a controller, such as for example, controller 38. When no signal is sent to the solenoid actuator 130 (i.e., the solenoid is de-energized), the hammer plate 134 may be in the retracted position, wherein the lower surface 140 thereof is spaced from the lower wall 88 of housing 86 by a first distance. By way of example, when in the retracted position, the upper surface 138 of the hammer plate 134 may contact the lower surface 142 of the upper wall 92 (Fig. 3A). When a signal is sent to the solenoid actuator 130 (i.e., the solenoid is energized), the solenoid actuator 130 moves the hammer plate 134 toward the lower wall 88 such that the lower surface 140 of the hammer plate 134 is spaced from the lower wall 88 by a second distance less than the first distance. Discontinuing the signal to the solenoid actuator 130 deenergizes the solenoid 130 causing the hammer plate 134 to move back to the retracted position. For example, the solenoid actuator 130 may include a return spring that absent a signal energizing the solenoid, biases the hammer plate 134 to the retracted position.

The interoperation between the actuator assembly 18, including first and second drive mechanisms 94, 128, and the housing 86, and the syringes 16 mounted in syringe carriage 14 for dispensing liquid samples will now be described. Before commencing a dispensing operation, the syringes 16 must be filled with the liquid to be dispensed. In one embodiment, the syringe bodies 58 may be loaded into syringe carriage 14 preloaded with the liquid. Alternatively, however, the syringes 16 may be filled with liquid through an aspiration process. In this regard, the pistons 64 may be disposed within the syringe bodies 58 in their lowest most position. This may be achieved, for example, by energizing the solenoid actuator 130 so as to move the hammer plate 134 to its extended position. In the extended position, the heads 68 may be effectively clamped between the lower surface 140 of the hammer plate 134 and an upper surface 146 of the lower wall 88 of housing 86. From this position, the stepper motor 96 may be energized so as to move the housing 86 downward toward the syringe carriage 14 until the pistons 64 are at their lowest position within the syringe bodies 58. At this point, the solenoid actuator 130 may be de-energized so that the hammer plate 134 moves back to its retracted position. The tips 62 of the needles 60 may be immersed in a source (not shown) of the liquid to be dispensed. The stepper motor 96 may again be energized to move the housing 86 away from the syringe carriage 14. The housing 86, and more particularly the upper surface 146 of the lower wall 88, engages the heads 68 so as to move the pistons 64 upward within the syringe bodies 58. Such movement creates a partial vacuum within the syringes 16 so as to draw the liquid from the source and into the syringe bodies 58. The length of travel of the housing 86 in the upward direction controls the volume of liquid ultimately drawn into the syringes 16.

Prior to dispensing liquid samples, the receiving surface (not shown) may be disposed on the holding plate 36. By way of example, the receiving surface may be a 96 well microplate (e.g., 8 x 12 array). The controller 38 may be configured so as to move the holding plate 36 such that a first row of eight (8) wells is disposed directly under the tips 62 of the needles 60. This may be done, for example, such that the needles 60 do not contact the microplate so that a non-contact dispensing mode of operation is implemented.

After the aspiration process and prior to dispensing, the pipettor 10 may be configured as shown in Fig. 3A. In this configuration, the heads 68 of the syringes 16 are in contact with the upper surface 146 of the lower wall 88 of the housing 86 and the solenoid actuator 130 is de-energized so that the hammer plate 134 is in the retracted position. This defines a first gap 148 between the lower surface 140 of the hammer plate 134 and the heads 68 of the syringes 16. To dispense a liquid sample, the first drive mechanism 94 may be activated to move the housing 86 downward toward the syringe carriage 14 by a relatively small amount. In particular, the stepper motor 96 may be energized so as to move the housing 86 downward. As illustrated in Fig. 3B, the housing 86 may be moved downward so as to define a second gap 150 between the heads 68 of the syringes 16 and the upper surface 146 of the lower wall 88 of the housing 86. Due to the friction between the pistons 64 and the wall of the syringe bodies 58, the heads 68 do not move with the small downward movement of the housing 86. Because the hammer plate 134 is coupled to the housing 86, the downward movement of the housing 86 now defines a third gap 152 (less than the first gap 148) between the lower surface 140 of the hammer plate 134 and the heads 68 of the syringes 16. As will become clear from below, the second gap 150 effectively defines a stoke length of the pistons 64 within the syringe bodies 58. Accordingly, the second gap 150 dictates the volume of the liquid sample that is to be dispensed from pipettor 10. More specifically, because the cross-sectional area of the syringe body 58 is typically fixed and known, the travel of the piston 64 effectively controls the volume of the liquid sample. By way of example, for a syringe body 58 having an inner diameter of approximately 1.0 mm, if a liquid sample of approximately 50 nanoliters is to be dispensed from the pipettor 10, a stroke length (i.e., second gap 150) of less than approximately 0.1 mm would achieve the desired dispensing volume. Those of ordinary skill in the art will recognize how to determine the stroke length in order to achieve a desired volume of the liquid sample. The determination of the stroke length as well as the control of the first drive mechanism 94 to achieve the stroke length corresponding to the desired volume may be programmed into the controller for the first drive mechanism 94, such as central controller 38.

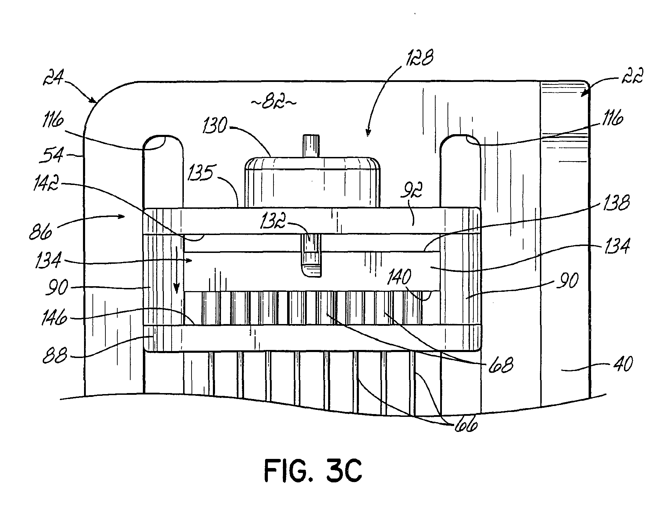

From the configuration shown in Fig. 3B, the second drive mechanism 128 may be activated to relatively quickly move the hammer plate 134 from the retracted position to the extended position. In particular, the solenoid actuator 130 may be energized so as to move the hammer plate 134 downward toward the lower wall 88 of the housing 86. The movement of the hammer plate 134 to the extended position causes contact between the lower surface 140 of the hammer plate 134 and the heads 68 of the syringes 16. The hammer plate 134 quickly drives the heads 68, and thus the pistons 64, downward so as to come into forceful contact with upper surface 146 of the lower wall 88, such configuration being shown in Fig. 3C. In this way, the lower wall 88 effectively operates as an anvil or stop plate and the upper surface 146 thereof operates as a first contact surface. Similarly, the lower wall 140 of the hammer plate effectively operates as a second contact surface. The first and second contact surfaces engage the heads 68 in a manner that achieves non-contact dispensing of the liquid samples.

The third gap 152 should be sufficient to allow the hammer plate 134 to reach a threshold velocity prior to the hammer plate 134 contacting the heads 68 so that the liquid sample is dispensed in a non-contact manner. By way of example, it is contemplated that a value of approximately 2.5 mm or greater for the third gap 152 would be sufficient to initiate non-contact dispensing. Such a gap would allow the hammer plate 134 to reach a threshold velocity prior to contacting the heads 68. However, the value may vary depending on the specific application and the specific type of second drive mechanism 128 used to initiate movement of the hammer plate 134. For example, for some quick-response solenoid actuators, the third gap 152 may be reduced so that the third gap 152 is effectively zero. Those of ordinary skill in the art will recognize how to vary the third gap 152 so as to achieve non-contact dispensing. Contacting the heads 68 of the syringes 16 with the hammer plate 134 so as to drive the heads 68 into forceful contact with the lower wall 88 operates as an effective impulse force on the liquid in the syringe bodies 58 that imparts high inertial forces on the liquid that are capable of overcoming the surface tension forces that tend to retain the liquid sample to the needle tip 62. Accordingly, the liquid samples are effectively ejected from the needle tips 62 as discrete droplets and are deposited into or onto the receiving surface, such as the wells of a microplate on the holding plate 36. Because driving the heads 68 into the lower wall 88 using hammer plate 134 generates inertial forces capable of overcoming the surface tension forces, the pipettor 10 is capable of dispensing liquid samples in a non-contact manner in volume ranges that heretofore have not been achieved with traditional syringe pipettors that essentially rely on gravitational forces to overcome the surface tension forces at the needle tip. For example, it is contemplated that pipettors 10 may be capable of dispensing liquid samples having a volume less than approximately 100 nanoliters. For example, the pipettor 10 may dispense liquid samples in the range of approximately 10 nanoliters to approximately 80 nanoliters. More particularly, the pipettor 10 may be configured to dispense a liquid sample of approximately 50 nanoliters. Larger volumes may also be possible.

Once the liquid samples are dispensed from the pipettor 10, the holder plate 36 may be indexed so as to dispose another row of wells below the needle tips 62. The solenoid actuator 130 may be de-energized to move the hammer plate 134 to the retracted position. The pipettor 10 would then be in the configuration as shown in Fig. 3A but with the heads 68 and housing 86 positioned slightly toward the syringe carriage 14 due to the dispensing of the prior liquid sample. The process may then be repeated to dispense additional liquid samples into corresponding wells of the microplate. Once a microplate is filled, additional microplates may be disposed on holding plate 36 and filled as described above. Moreover, if the liquid in the syringes 16 becomes low or depleted, the aspiration process as described above may be repeated to refill the supply of liquid therein.

The pipettor 10 as described above provides several advantages relative to existing pipettors. In particular, the pipettor 10 is a syringe-type of dispenser capable of operating in a non-contact mode and capable of dispensing liquid samples having volumes in a reduced volume range, such as in the nanoliter range. Because the pipettor 10 is syringe based, its construction is not as complex as traditional valve-type pipettors and its operation is relatively simple and well understood in the industry. Moreover, it is believed that the pipettor 10 offers a lower cost option for dispensing liquid samples in the nanoliter range relative to more traditional valve-operated pipettors.

In addition to the advantages above, the pipettor 10 may not only dispense liquid samples having volumes in the nanoliter range, but also operate to dispense liquid samples in a larger volume range. In effect, the pipettor 10 is a dual-purpose pipettor, capable of dispensing in both the nanoliter and microliter or larger volume ranges. To dispense liquid samples in a greater volume range, such as the microliter range, the syringes 16 may be filled by the aspiration process as described above. Prior to dispensing liquid samples, however, and with for example, the pipettor 10 in the configuration shown in Fig. 3A, the solenoid actuator 130 may be energized so as to move the hammer plate 134 to the extended position so that the heads 68 of syringes 16 are effectively clamped between the lower surface 140 of the hammer plate 134 and the upper surface 146 of the lower wall 88 (such clamping configuration being shown in Fig. 3C). For dispensing in the microliter range, the solenoid actuator 130 will remain energized and the housing 86 will be moved via the stepper motor 94 to move the pistons 64 within the syringe bodies 58 to thereby dispense a liquid sample from the needle tip 62. Because the hammer plate 134 is mounted to housing 86, movement of the housing 86 when the heads 68 are clamped moves the hammer plate 134 and lower wall 88 in unison. In contrast to that described above, this configuration does not implement an effective impulse force caused using the hammer plate 134 to drive the heads 68 into forceful contact with the lower wall 88, but instead, the clamping of the heads 86 between the lower wall 88 and the hammer plate 134 provides for a less explosive, more gentle movement of the pistons 64 with movement of the housing 86. In this mode of operation, the inertial forces due to the movement of the housing 86 may not be high enough to overcome the surface tension forces that tend to retain the liquid sample to the needle tip 62. Accordingly, in this mode, the volume of the liquid sample must be sufficient such that the weight (i.e., gravitational forces) of the liquid sample overcomes the surface tension effects at the needle tip 62 and allows the liquid sample to separate therefrom under its own weight. In this way, the pipettor 10 has the capability to operate as a traditional non-contact syringe-type of pipettor. It is contemplated that in this mode, pipettor 10 may be capable of dispensing liquid samples in a volume range between approximately 0.1 microliters and approximately 100 microliters. Larger volumes may be achieved depending on the size of the pipettor 10. However, whereas current syringe pipettors operating in a non-contact mode are not capable of dispensing liquid samples in a very small volume range (e.g., nanoliter range), the pipettor 10 as described above is capable of dispensing liquid samples in such a reduced volume range. This results in a pipettor that is more robust and versatile in use.

The above description is not intended to limit the scope of the appended claims. Additional embodiments and modifications will readily appear to those skilled in the art. For example, while the embodiments shown and described above include eight (8) syringes in the syringe carriage, the number of syringes may be more or less than this amount depending of the specific application. Those of ordinary skill in the art will understand how to modify the pipettor to accommodate the desired number of syringes. Accordingly, departures may be made from such details without departing from the spirit and scope of applicant's inventive concept.

## Claims

1. A pipettor for dispensing liquid samples from at least one syringe, the at least one syringe including a syringe body containing a supply of the liquid to be dispensed and a movable piston disposed therein, comprising:
a frame;
a syringe carriage coupled to the frame and adapted to support the at least one syringe therein; and
an actuator assembly coupled to the frame and operatively coupled to the piston for actuating the at least one syringe to dispense the liquid sample therefrom, the actuator assembly including a first contact surface coupled to a first drive mechanism and a second contact surface coupled to a second drive mechanism, the first and second contact surfaces cooperating to provide non-contact dispensing of at least a portion of the supply of liquid from the syringe.

2. The pipettor of claim 1, wherein the first contact surface is defined by an anvil plate movably mounted to the frame and coupled to the first drive mechanism for moving the anvil plate relative to the syringe carriage.

3. The pipettor of claim 1 or 2, wherein the second contact surface is defined by a hammer plate coupled to the second drive mechanism for moving the hammer plate relative to the anvil plate.

4. The pipettor of claim 2 or 3, wherein the anvil plate carries the second drive mechanism.

5. The pipettor of any preceding claim, wherein the first drive mechanism includes a linear slide comprising:
a stepper motor;
a lead screw coupled to the stepper motor;
a mounting block coupled to the lead screw; and
a track coupled to the mounting block, wherein activation of the stepper motor rotates the lead screw to move the mounting block along the track.

6. The pipettor of any preceding claim, wherein the second drive mechanism includes a solenoid actuator.

7. The pipettor of any preceding claim, wherein the at least one syringe includes a syringe body adapted to contain a supply of the liquid to be dispensed, a piston movably disposed within the syringe body, a piston rod coupled to the piston and extending outside the syringe body, a head on the piston rod opposite the piston, and a needle projecting from the syringe body and having a tip through which the liquid sample is dispensed, the actuator assembly further comprising:
a housing movably mounted to the frame and including an anvil plate, the housing positioned such that the head of the at least one syringe is positioned in the housing and above the anvil plate, the first drive mechanism coupled to the housing for moving the housing relative to the syringe carriage;
a hammer plate disposed in the housing and located above the head of the at least one syringe, the second drive mechanism coupled to the hammer plate for moving the hammer plate relative to the anvil plate,
wherein activation of the first drive mechanism separates the anvil plate from the head of the at least one syringe, and activation of the second drive mechanism provides contact between the hammer plate and the head of the at least one syringe to drive the head into forceful contact with the anvil plate to thereby provide non-contact dispensing of the liquid sample from the needle and onto the receiving surface.

8. The pipettor of claim 7, wherein the housing carries the second drive mechanism.

9. The pipettor of claim 7 or 8, wherein the second drive mechanism is a solenoid actuator.

10. A method for dispensing a liquid sample onto a receiving surface from a syringe pipettor having a syringe body containing the liquid to be dispensed, a movable piston disposed in the syringe body, a piston rod coupled to the piston and extending out of the syringe body, a head at the end of the piston rod opposite the piston, and a needle extending from the syringe body and having a tip through which the liquid sample is dispensed, comprising:
moving a first contact surface disposed beneath the head so as to define a first gap between the head and the first contact surface;
moving a second contact surface disposed above the head so as to contact the head; and
driving the head into forceful contact with the first contact surface using the second contact surface; and
dispensing at least a portion of the liquid in the syringe as a liquid sample onto the receiving surface in a non-contact operation.

11. The method of claim 10, further comprising:
determining a stroke length of the piston corresponding to a desired volume of liquid to be dispensed; and
moving the first contact surface so that the first gap corresponds to the stroke length.

12. The method of claim 10 or 11 wherein moving the second contact surface to contact the head further comprises:
providing a second gap between the second contact surface and the head; and
moving the second contact surface so that it is moving at a threshold velocity prior to contacting the head.

13. The method of claim 10, 11 or 12, further comprising repeating the steps of moving the first contact surface, moving the second contact surface, and driving the head into forceful contact with the first contact surface to dispense multiple liquid samples from the liquid contained in the syringe body.

14. The method of claim 10, 11, 12 or 13, further comprising:
operating the syringe pipettor so as to dispense at least a portion of the liquid in the pipettor as a liquid sample having a volume less than approximately 100 nanoliters in a non-contact dispensing process, wherein inertial forces overcome surface tension forces to separate the liquid sample from the pipettor.

15. The method of claim 10, 11, 12, 13 or 14, further comprising:
operating the syringe pipettor so as to dispense at least a portion of the liquid in the pipettor as a liquid sample having a volume greater than approximately 100 nanoliters in a non-contact dispensing process, wherein gravitational forces overcome surface tension forces to separate the liquid sample from the pipettor.
